# DEMANDE DE BREVET EUROPEEN

(11) **EP 2 386 947 A1**
(43) Date de publication de la demande: **16.11.2011**
(21) Numéro de dépôt: 11150042.7
(22) Date de dépôt: 03.01.2011
(51) Int. Cl.: G06F 9/445

(54) **Dispositif de gestion dynamique d'applications téléchargeables, pour un équipement de communication**

(30) Priorité: 11.05.2010 FR 1053646
(71) Demandeur: Alcatel Lucent, 75007 Paris (FR)
(72) Inventeur: Senot, Christophe, 91620, NOZAY (FR); KOSTADINOV, Dimitre Davidov, 91620, NOZAY (FR)
(74) Mandataire: Chaffraix, Sylvain

(57) **Abrégé**

Un dispositif (D) est destiné à gérer des applications pour un équipement de communication (EC) d'un usager pouvant se connecter à un réseau de communication (R). Ce dispositif (D) comprend i) des moyens de recherche (MR) agencés pour déterminer via le réseau (R) des applications pouvant être téléchargées et utilisées par l'équipement de communication (EC) et potentiellement utiles à l'usager en fonction d'au moins un paramètre, et ii) des moyens de gestion (MG) agencés pour ordonner le téléchargement dans des moyens de stockage (MS2), par l'équipement de communication (EC), de l'une au moins des applications déterminées afin de la proposer à l'usager, et pour contrôler l'installation de chaque application proposée sélectionnée par cet usager afin qu'elle puisse être éventuellement utilisée au moins temporairement.

## Description

L'invention concerne les équipements de communication d'usagers, éventuellement de type mobile, et plus précisément le téléchargement d'applications (informatiques) par de tels équipements de communication.

Le nombre d'applications (informatiques) mises à la disposition des usagers d'équipements de communication (filaires ou non filaires), par exemple via l'Internet, ne cessant de croître, ces usagers ont de plus en plus de difficulté non seulement à trouver des applications qui correspondent à leur besoins de façon temporaire ou permanente, mais également à être mis au courant des nouvelles applications susceptibles de les intéresser.

En raison de ces difficultés, plusieurs outils logiciels ont été récemment proposés aux usagers pour faciliter l'accessibilité aux applications. C'est notamment le cas de l'outil appelé Chorus® (commercialisé par Envio Networks). Ce dernier permet à des usagers d'attribuer des notes aux applications qu'ils ont téléchargées et utilisées, et propose aux amis et relations de ces usagers des applications qu'ils n'ont pas encore téléchargées et dont les notes moyennes sont supérieures à un seuil. L'inconvénient principal de cet outil réside dans le fait que les applications qu'il propose ne correspondent que rarement aux besoins réels des usagers du fait que ces derniers, bien qu'étant des amis ou des relations, ne partagent pas toujours les mêmes centres d'intérêt ou goûts et/ou n'ont pas les mêmes exigences. En outre, cette solution ne propose que des listes d'applications qui sont issues d'autres listes contenant des nombres très réduits d'applications, si bien qu'elles ne tiennent pas compte de la plus grande partie des applications qui sont effectivement disponibles mais qui n'ont pas encore été téléchargées par les autres usagers. De plus, chaque usager doit télécharger manuellement chaque application, puis l'installer manuellement et éventuellement la désinstaller manuellement si il ne s'en sert plus. Enfin, cet outil ne tient compte ni du contexte en cours de l'usager, ni de l'activité en cours de cet usager, si bien que les applications qui lui sont proposées ont peu de chance de présenter un intérêt immédiat.

C'est également le cas des outils appelés Yappler® et AppsFire®. Ces derniers permettent aux usagers de créer leurs propres listes d'applications personnalisées, et éventuellement de les mettre automatiquement à jour, puis de s'échanger ces listes entre amis et/ou entre membres d'un réseau social. Ces deux outils présentent des inconvénients sensiblement identiques à ceux présentés par l'outil Chorus®.

C'est également le cas de l'outil appelé SideBar®. Ce dernier sélectionne périodiquement pour chaque usager, parmi les nouvelles applications, celles qui satisfont à des critères résultant des réponses que cet usager a donné à des questions relatives à ses informations démographiques (âge, sexe, catégorie socioprofessionnelle) et à ses préférences, puis adresse à chaque usager un descriptif de chaque application sélectionnée pour lui. Comme dans le cas des outils précédents, chaque usager doit télécharger manuellement chaque application qui a été sélectionnée pour lui et qui l'intéresse, puis il doit l'installer manuellement et éventuellement la désinstaller manuellement si il ne s'en sert plus. En outre, cet outil ne tient compte ni du contexte en cours de l'usager, ni de l'activité en cours de cet usager, et donc les applications qui lui sont proposées ont peu de chance de présenter un intérêt immédiat.

C'est également le cas de l'outil appelé Apple Genius®. Ce dernier détermine des affinités entre les applications qui ont été téléchargées par un usager et des applications que ce dernier n'a pas encore téléchargées, afin de lui proposer de nouvelles applications. L'inconvénient principal de cet outil réside dans le fait qu'il ne propose que des nouvelles applications qui présentent au moins une fonctionnalité commune avec une application qui a été précédemment téléchargée par un usager, et donc les autres nouvelles applications ne sont jamais proposées alors même que certaines d'entre elles pourraient s'avérer intéressantes. En outre, cet outil ne tient compte ni du contexte en cours de l'usager, ni de l'activité en cours de cet usager, et donc les applications qui lui sont proposées ont peu de chance de présenter un intérêt immédiat.

L'invention a donc pour but de remédier à tout ou partie des inconvénients présentés ci-avant.

Elle propose à cet effet un dispositif, destiné à gérer des applications pour un équipement de communication d'un usager capable de se connecter à un réseau de communication, et comprenant:
- des moyens de recherche agencés (ou conçus) pour déterminer, via le réseau et en fonction d'au moins un paramètre, des applications qui peuvent être téléchargées et utilisées par l'équipement de communication et qui sont potentiellement utiles à l'usager, et
- des moyens de gestion agencés (ou conçus) pour ordonner (ou déclencher) le téléchargement dans des moyens de stockage, par l'équipement de communication, de l'une au moins des applications déterminées afin de la proposer à l'usager, et pour contrôler l'installation de chaque application proposée sélectionnée par l'usager afin qu'elle puisse être éventuellement utilisée au moins temporairement.

Le dispositif de gestion selon l'invention peut comporter d'autres caractéristiques qui peuvent être prises séparément ou en combinaison, et notamment :
- chaque paramètre peut être choisi parmi (au moins) l'activité en cours de l'usager, des informations contextuelles, un profil de l'usager, des préférences de l'usager, la capacité de stockage restante des moyens de stockage, une quantité maximale de données que l'on autorise à télécharger, la bande passante du réseau pouvant être utilisée par l'équipement de communication, la couverture du réseau, une estimée de durée de l'activité en cours de l'usager, une prévision de changement de contexte ou d'activité, et l'énergie disponible dans l'équipement de communication;
   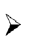 les informations contextuelles peuvent être choisies parmi (au moins) les applications qui sont en cours d'utilisation par l'usager, le lieu où est situé l'usager, l'heure considérée, le jour considéré, les informations qui sont contenues dans un agenda électronique de l'usager, l'environnement social de l'usager, les applications qu'utilise habituellement l'usager lorsqu'il exerce l'activité en cours, des applications utilisées par des équipements de communication appartenant à des usagers situés dans le voisinage de l'usager considéré;
      - il peut comprendre des moyens d'analyse agencés pour déduire l'activité en cours de l'usager de certaines informations contextuelles et/ou d'informations de localisation de cet usager et/ou d'activités antérieures de l'usager;
         o les moyens d'analyse peuvent être agencés pour déduire de futures informations contextuelles et/ou une durée de validité des informations contextuelles courantes de l'activité en cours de l'usager;
         o les moyens d'analyse peuvent être agencés pour déduire une future activité de l'usager de l'activité en cours de cet usager et d'éventuelles habitudes antérieures de cet usager;
- ses moyens de gestion peuvent être agencés pour ordonner le téléchargement de chaque application déterminée dans des moyens de stockage qui sont dédiés au stockage temporaire;
- ses moyens de gestion peuvent être agencés pour proposer les applications téléchargées dans les moyens de stockage par affichage dans une zone dédiée d'un écran d'affichage de l'équipement de communication ;
   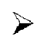 ses moyens de gestion peuvent être agencés pour contrôler l'affichage dans la zone dédiée d'un nombre d'applications proposées qui est inférieur ou égal à un premier seuil (éventuellement configurable par l'usager);
- ses moyens de gestion peuvent être agencés pour déterminer chaque application précédemment installée et devenue inutile compte tenu du contexte en cours et d'un éventuel futur contexte déduit et/ou de l'activité en cours et d'une éventuelle future activité déduite, et pour ordonner la désinstallation de chaque application inutile déterminée;
   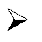 ses moyens de gestion peuvent être agencés pour incrémenter d'une unité une valeur qui est représentative du nombre de fois qu'une application a été téléchargée par l'équipement de communication et utilisée par son usager, et, lorsqu'une application est devenue inutile, soit pour ordonner sa suppression desdits moyens de stockage lorsque sa valeur associée est inférieure à un deuxième seuil, soit son stockage dans d'autres moyens de stockage dédiés lorsque sa valeur associée est supérieure ou égale au deuxième seuil, afin de pouvoir la proposer de nouveau ultérieurement sans avoir à la télécharger de nouveau;
      • ses moyens de gestion peuvent être agencés pour proposer à l'usager de transférer une application stockée dans les moyens de stockage vers d'autres moyens de stockage qui sont dédiés au stockage permanent d'applications, lorsque la valeur associée à cette application est supérieure à un troisième seuil;
- ses moyens de gestion peuvent être agencés pour analyser l'usage des applications téléchargées en fonction d'un contexte en cours et/ou d'une activité en cours, de manière à établir une correspondance entre des types d'application et des contextes et/ou activités;
- il peut être agencé pour recevoir du réseau la liste des applications qui sont en cours d'utilisation dans des équipements de communication voisins, et/ou pour transmettre la liste des applications qui sont en cours d'utilisation dans son équipement de communication.

L'invention propose également un équipement de communication d'usager pouvant se connecter à un réseau de communication (éventuellement mobile ou cellulaire) et équipé d'un dispositif de gestion du type de celui présenté ci-avant.

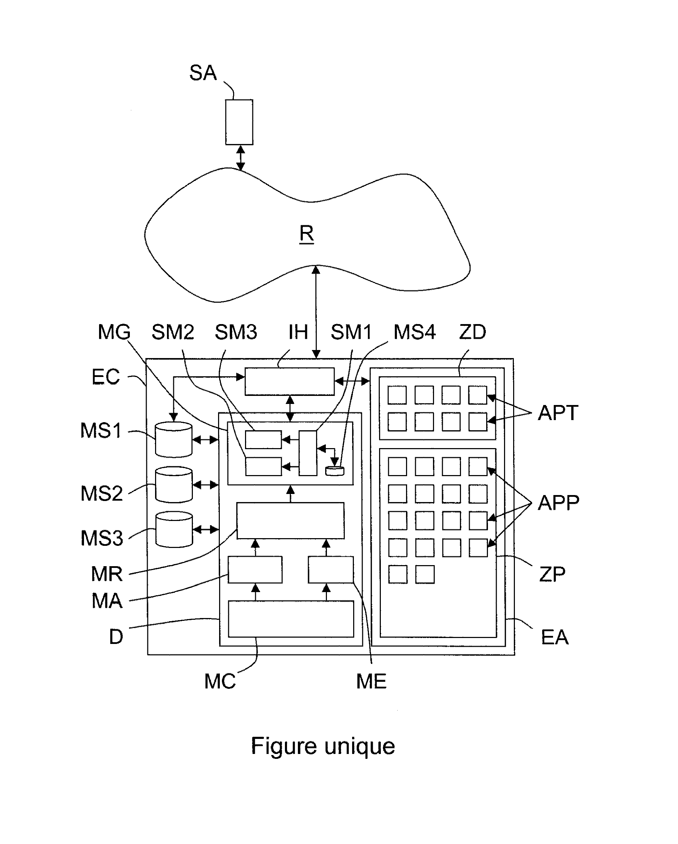

D'autres caractéristiques et avantages de l'invention apparaîtront à l'examen de la description détaillée ci-après, et du dessin annexé, sur lequel l'unique figure illustre de façon très schématique et fonctionnelle un réseau de communication auquel sont connectés un serveur d'applications et un équipement de communication d'usager équipé d'un exemple de réalisation d'un dispositif de gestion selon l'invention.

Le dessin annexé pourra non seulement servir à compléter l'invention, mais aussi contribuer à sa définition, le cas échéant.

L'invention a pour objet d'offrir un dispositif D destiné à gérer dynamiquement des applications pour un équipement de communication EC d'un usager, capable de se connecter à un réseau de communication R.

Dans ce qui suit, on considère à titre d'exemple non limitatif que les usagers sont munis d'équipements de communication EC de type non filaire, comme par exemple des téléphones mobiles (éventuellement de type smartphone), pouvant se connecter par voie d'ondes à un réseau de communication R de type non filaire (par exemple un réseau mobile (ou cellulaire)). Mais, l'invention n'est limitée ni à ce type de réseau de communication, ni à ce type d'équipement de communication. Elle concerne en effet tout type de réseau de communication filaire ou non filaire, et donc tout type d'équipement de communication pouvant se connecter à un réseau de communication filaire ou non filaire et pouvant télécharger et utiliser des applications. Par conséquent, le réseau de communication R pourra également être un réseau filaire (par exemple de type ADSL), et les équipements de communication EC pourront également être des ordinateurs fixes ou portables, des téléphones fixes, des assistants personnels numériques communicants (ou « PDAs »), des récepteurs de contenus (tels que des passerelles de domicile (ou "home gateways") ou des set-top boxes (STBs)), ou des consoles de jeux communicantes, par exemple.

On a schématiquement représenté sur l'unique figure un réseau (de communication) R auquel sont connectés, d'une première part, un équipement (de communication) EC, appartenant à un usager qui est client (directement ou indirectement (nomade)) de l'opérateur dudit réseau R, et, d'autre part, un équipement de réseau SA (comme par exemple un serveur d'applications (ou "application store")) dans lequel se trouvent stockées des applications téléchargeables.

On notera, d'une part, que plusieurs, voire une multitude, d'équipements (de communication) EC peuvent être connectés au réseau (de communication) R, et, d'autre part, que plusieurs équipements de réseau SA, stockant chacun des applications téléchargeables, peuvent être connectés directement ou indirectement au réseau R.

Comme illustré sur l'unique figure, l'équipement EC comprend notamment des premiers moyens de stockage MS1, une interface homme/machine IH et un écran d'affichage EA.

Les premiers moyens de stockage MS1 sont agencés de manière à stocker de façon permanente des applications dites permanentes APP. On entend ici par "stockage permanent" un stockage a priori de longue durée, par opposition à un stockage temporaire qui doit se faire sur une courte durée. On comprendra que la définition fournie ci-avant n'interdit pas qu'une application téléchargée dans le but d'être stockée de façon permanente, peut être supprimée des premiers moyens de stockage MS1 très rapidement après son téléchargement si elle ne donne pas satisfaction à l'usager.

Ces premiers moyens de stockage MS1 peuvent se présenter sous n'importe quelle forme connue de l'homme de l'art, comme par exemple une mémoire (éventuellement purement logicielle).

L'écran d'affichage EA est agencé de manière à afficher des données. Ainsi, il peut par exemple comprendre une zone principale ZP dans laquelle peuvent être affichées des icônes représentatives des applications permanentes APP qui sont stockées dans les premiers moyens de stockage MS1 et qui ont été précédemment installées.

L'interface homme/machine IH est agencée de manière à assurer l'interface entre son équipement EC et l'usager (par exemple via l'écran d'affichage EA qui peut être tactile et/ou via un clavier et/ou une souris (ou des moyens de sélection analogues)).

L'invention propose d'associer un dispositif de gestion D à chaque équipement EC pour gérer dynamiquement les applications qu'il peut télécharger.

Dans l'exemple non limitatif illustré sur l'unique figure, le dispositif (de gestion) G fait partie de l'équipement EC. Mais, il pourrait être externe à cet équipement EC tout en lui étant couplé. Par conséquent, le dispositif D selon l'invention peut être réalisé sous la forme de modules logiciels (ou informatiques), ou bien d'une combinaison de circuits électroniques et de modules logiciels, ou encore de circuits électroniques.

Comme illustré sur l'unique figure, un dispositif D, selon l'invention, comprend au moins des moyens de recherche MR et des moyens de gestion MG.

Les moyens de recherche MR sont agencés pour déterminer, via le réseau R et en fonction d'au moins un paramètre, des applications qui peuvent être téléchargées (ici auprès du serveur d'applications SA) et utilisées par leur équipement EC, après stockage dans des deuxièmes moyens de stockage MS2, et qui sont potentiellement utiles à l'usager de cet équipement EC.

Les moyens de recherche MR agissent en quelque sorte comme un moteur décisionnel.

On notera que la sélection d'applications peut par exemple être similaire à la résolution du problème de Knapsack où la capacité du sac est le minimum entre l'espace physiquement disponible et la quantité de données téléchargeables, et où l'on attribue à chaque application une taille (poids) et une pertinence (valeur). Il s'agit plus précisément ici de sélectionner le jeu d'applications qui va notamment maximiser la satisfaction de l'usager (par exemple via la somme des pertinences attribuées aux applications) et dont la taille est inférieure ou égale à la capacité restante du sac (ou des deuxièmes moyens de stockage MS2). Comme indiqué ci-avant, un ou plusieurs autres paramètres additionnels et/ou une ou plusieurs contraintes peuvent également entrer en ligne de compte lors de la sélection. Ainsi, on peut décider de ne pas sélectionner d'applications redondantes et/ou rendre prioritaire les applications qui ont une pertinence très élevée même si leurs poids sont élevés.

Dans l'exemple non limitatif illustré sur l'unique figure, les deuxièmes moyens de stockage MS2 font partie de l'équipement EC. Mais, cela n'est pas obligatoire. Par ailleurs, dans l'exemple non limitatif illustré sur l'unique figure, les deuxièmes moyens de stockage MS2 sont indépendants des premiers moyens de stockage MS1. Mais, ils pourraient faire partie de ces derniers (MS1).

Ces deuxièmes moyens de stockage MS2 peuvent se présenter sous n'importe quelle forme connue de l'homme de l'art, comme par exemple une mémoire (éventuellement purement logicielle).

Tout type de paramètre connu de l'homme de l'art et de nature à permettre une sélection (ou filtration) d'applications peut être utilisé. Ainsi, on pourra par exemple utiliser l'un au moins des paramètres mentionnés ci-dessous de façon non exhaustive (et de préférence plusieurs):
- l'activité en cours de l'usager (c'est-à-dire l'action qu'il est en train d'effectuer, comme par exemple téléphoner, utiliser un logiciel, courir, marcher, se trouver dans (ou devant) un magasin ou une salle de spectacle),
- des informations contextuelles, comme par exemple et de façon non exhaustive les applications qui sont en cours d'utilisation par l'usager, le lieu où est situé l'usager (connu d'un système de localisation qui fait partie soit de l'équipement EC, soit du réseau R), l'heure considérée, le jour considéré, les informations qui sont contenues dans un agenda électronique (accessible) de l'usager, l'environnement social de l'usager (liste d'amis, appartenance à un réseau social ou professionnel, notamment), les applications qu'utilise habituellement l'usager lorsqu'il exerce l'activité en cours (ce qui nécessite d'enregistrer dans une table de correspondance des types d'activité en correspondance d'applications utilisées),
- des applications qui sont en cours d'utilisation par des équipements de communication EC' qui appartiennent à des usagers qui sont situés dans le voisinage de l'usager de l'équipement EC considéré,
- la capacité de stockage restante des deuxièmes moyens de stockage MS2,
- la bande passante du réseau R qui peut être utilisée par l'équipement EC considéré (laquelle est accessible auprès du réseau R),
- la couverture du réseau R (laquelle définit les éventuelles zones d'ombre, zones de fort trafic et zones de faible trafic),
- l'estimée de la durée de l'activité en cours de l'usager,
- une prévision de changement de contexte,
- une prévision de changement d'activité,
- l'énergie qui est disponible dans l'équipement EC (laquelle est fonction du niveau de charge de la batterie dans le cas d'un équipement EC de type mobile ou portable),
- un profil de l'usager de l'équipement EC considéré (on entend ici par « profil d'usager » un ensemble de données numériques qui définissent l'identité d'un usager comme par exemple ses données démographiques (âge, sexe, catégorie socioprofessionnelle) et des intérêts (ou des préférences ou des habitudes ou encore des passe temps) pour un ou plusieurs sujets - ce profil peut être stocké dans l'équipement EC ou bien dans un équipement de réseau (par exemple de l'opérateur du réseau R) accessible via ce dernier (R)),
- des préférences de l'usager de l'équipement EC considéré, par exemple fournies par ledit usager (ces préférences peuvent être stockées dans l'équipement EC ou bien dans un équipement de réseau accessible via le réseau R),
- la quantité maximale de données que l'on autorise à télécharger (cette quantité peut être soit définie par l'usager, soit fonction d'au moins un autre paramètre, comme par exemple l'un au moins de ceux mentionnés ci-avant,
- le prix de l'application et/ou la marge réalisée par le fournisseur d'application et/ou l'opérateur sur l'application téléchargée.

Comme illustré non limitativement sur l'unique figure, certains au moins des paramètres de recherche peuvent être déterminés par des moyens (ou modules) qui font partie du dispositif D. Ainsi, le dispositif D peut par exemple comporter des moyens de collection MC chargés de collecter les informations contextuelles (notamment celles précitées). On notera que ces moyens de collection MC peuvent éventuellement effectuer des traitements de certaines données collectées afin d'en déduire des informations contextuelles. Ainsi, ils peuvent éventuellement transformer une position géographique (telle qu'un point GPS) en une adresse de lieu connu ou de magasin connu, ou bien effectuer une correspondance entre un environnement social et un réseau social afin de déterminer des amis ou relations situés à proximité de l'usager considéré, ou encore déduire de données accélérométriques ou de positions géographiques successives le fait que l'usager considéré est statique, en train de marcher ou de courir dans une direction, ou circule dans un moyen de transport.

Egalement comme illustré non limitativement sur l'unique figure, le dispositif D peut par exemple comporter des moyens d'analyse MA chargés, au moins, de déduire l'activité en cours de l'usager de certaines informations contextuelles et/ou d'informations de localisation de cet usager et/ou d'activités antérieures de l'usager. A cet effet, ils sont couplés aux moyens de collection MC. On notera que ces moyens d'analyse MA peuvent être également agencés pour déduire de futures informations contextuelles et/ou la durée de validité des informations contextuelles courantes de l'activité en cours de l'usager. Ils peuvent être également agencés pour déduire une future activité de l'usager de l'activité en cours de cet usager et d'éventuelles habitudes antérieures de cet usager.

Par exemple, ils peuvent fournir des descriptions sémantiques des activités en cours ou futures et des contextes en cours ou futurs. A titre d'exemples non limitatifs, ils peuvent:
- déduire d'un contexte de type "usager situé dans un cinéma" l'activité "usager regarde un film",
- utiliser une séquence de contextes successifs (ou de changements de contextes) pour en déduire une activité en cours,
- déduire de l'activité en cours de l'usager sa future activité (par exemple si l'usager fait du sport ils peuvent en déduire qu'il sera prochainement chez lui),
- déduire d'activité anciennes l'activité en cours et/ou la future activité, lorsque l'usager effectue toujours la même séquence d'actions (ou d'activités) dans un contexte donné (comme par exemple toujours rentrer chez lui par le même trajet, ou toujours rejoindre son lieu de travail en empruntant le même trajet, ou bien toujours rentrer chez lui après avoir couru, ou encore toujours faire ses courses le vendredi soir dans un même magasin).

Egalement comme illustré non limitativement sur l'unique figure, le dispositif D peut par exemple comporter des moyens d'estimation ME chargés d'estimer la quantité de données (et donc indirectement le nombre d'applications) qui peuvent être téléchargées compte tenu de l'un au moins des paramètres précités, et notamment le contexte en cours ou futur, l'activité en cours ou future, l'estimée de durée de l'activité en cours de l'usager, une prévision de changement de contexte, la capacité de stockage restante des deuxièmes moyens de stockage MS2 et l'énergie disponible dans l'équipement EC. A cet effet, ils sont couplés aux moyens de collection MC.

Les moyens de gestion MG sont agencés, d'une part, pour ordonner (ou déclencher) le téléchargement dans les deuxièmes moyens de stockage MS2, par l'équipement de communication EC, de l'une au moins des applications déterminées par les moyens de recherche MR, afin de la proposer à l'usager (en vue d'une éventuelle sélection via l'interface homme/machine IH), et, d'autre part, pour contrôler l'installation de chaque application proposée à cet usager et sélectionnée par ce dernier afin qu'elle puisse être éventuellement utilisée au moins temporairement.

Comme illustré non limitativement sur l'unique figure, les moyens de gestion MG peuvent comprendre un premier sous-module SM1 chargé de contrôler l'affichage des icônes des applications proposées APT, via l'interface homme/machine IH, et un deuxième sous-module SM2 chargé de contrôler l'installation de chaque application APT sélectionnée par l'usager au moyen de cette même interface homme/machine IH.

On notera que les deuxièmes moyens de stockage MS2 sont de préférence dédiés au stockage temporaire des applications qui ont été téléchargées. Ces applications APT sont dites temporaires.

Comme illustré non limitativement sur l'unique figure, les moyens de gestion MG peuvent être avantageusement agencés pour proposer à l'usager les applications temporaires APT (qui n'ont été que téléchargées) par affichage d'icônes qui les représentent dans une zone dédiée ZD de l'écran d'affichage EA de l'équipement EC. Comme illustré, cette zone dédiée ZD est par exemple située juste au-dessus (ou en variante juste en dessous) de la zone principale ZP dans laquelle sont affichées les icônes qui représentent les applications permanentes APP (stockées dans les premiers moyens de stockage MS1).

On notera que les moyens de gestion MG peuvent être éventuellement agencés pour contrôler l'affichage dans la zone dédiée ZD d'un nombre d'applications APT proposées qui est inférieur ou égal à un premier seuil S1, qui peut être éventuellement configurable par l'usager.

Les moyens de gestion MG peuvent être également agencés, d'une part, pour déterminer chaque application temporaire APT qui a été précédemment installée et qui est devenue inutile compte tenu du contexte en cours et d'un éventuel futur contexte déduit et/ou de l'activité en cours et d'une éventuelle future activité déduite, et, d'autre part, pour ordonner la désinstallation de chaque application temporaire APT inutile ainsi déterminée.

Comme illustré non limitativement sur l'unique figure, les moyens de gestion MG peuvent comprendre un troisième sous-module SM3 chargé de contrôler chaque désinstallation d'une application temporaire APT précédemment sélectionnée par l'usager.

On notera que la désinstallation d'une application temporaire APT peut être accompagnée d'une suppression de cette application temporaire APT des deuxièmes moyens de stockage MS2 ou bien d'un transfert de cette application temporaire APT des deuxièmes moyens de stockage MS2 vers des troisièmes moyens de stockage MS3 dédiés. Ce choix est effectué par les moyens de gestion MG (et plus précisément leur troisième sous-module SM3). Dans ce cas, le troisième sous-module SM3 peut par exemple être agencé pour incrémenter d'une unité une valeur V qui est représentative du nombre de fois qu'une application temporaire APT a été téléchargée par l'équipement EC puis utilisée par l'usager. Lorsqu'une application temporaire APT est devenue inutile (du fait qu'elle n'a pas été utilisée par l'usager depuis une durée supérieure à un seuil), le troisième sous-module SM3 peut soit ordonner sa suppression des deuxièmes moyens de stockage MS2 lorsque sa valeur V associée est inférieure à un deuxième seuil S2 (V < S2), soit son stockage dans les troisièmes moyens de stockage MS3 lorsque sa valeur V associée est supérieure ou égale au deuxième seuil S2 (V ≥ S2). On comprendra que ce transfert d'une application temporaire APT inutile dans les troisièmes moyens de stockage MS3 est destiné à permettre de la proposer de nouveau ultérieurement sans avoir à la télécharger de nouveau tout en la rendant invisible pour l'usager dans les zones principale ZP et dédiée ZD.

Dans l'exemple non limitatif illustré sur l'unique figure, les troisièmes moyens de stockage MS3 font partie de l'équipement EC. Mais, ils pourraient faire partie du dispositif D. Par ailleurs, dans l'exemple non limitatif illustré sur l'unique figure, les troisièmes moyens de stockage MS3 sont indépendants des premiers moyens de stockage MS1. Mais, ils pourraient faire partie de ces derniers (MS1).

Ces troisièmes moyens de stockage MS3 peuvent se présenter sous n'importe quelle forme connue de l'homme de l'art, comme par exemple une mémoire cache (éventuellement purement logicielle).

On notera que les valeurs V, qui sont associées aux applications temporaires APT stockées dans les deuxièmes moyens de stockage MS2, peuvent être stockées dans des quatrièmes moyens de stockage MS4. Dans l'exemple non limitatif illustré sur l'unique figure, les quatrièmes moyens de stockage MS4 font partie des moyens de gestion MG du dispositif D. Mais, ils pourraient faire partie de l'équipement EC.

Les moyens de gestion MG peuvent être également et éventuellement agencés pour proposer à l'usager de transférer une application temporaire APT stockée dans les deuxièmes moyens de stockage MS2 vers les premiers moyens de stockage MS1 lorsque la valeur V qui est associée à cette application temporaire APT est supérieure à un troisième seuil S3 (lui même supérieur au deuxième seuil S2 (S3 > S2). Cette option est destinée à rendre permanente une application qui était jusque là temporaire. Cette proposition se fait via l'interface homme/machine IH. On comprendra qu'une fois qu'une application APT a été transférée dans les premiers moyens de stockage MS1, son icône apparaît dans la seule zone principale ZP de l'écran d'affichage EA.

Par ailleurs, les moyens de gestion MG peuvent être également et éventuellement agencés pour analyser l'usage que l'usager fait des applications temporaires APT téléchargées en fonction d'un contexte en cours et/ou d'une activité en cours. Cela permet en effet d'établir une correspondance entre des types d'application et des contextes et/ou activités potentiellement utiles aux moyens de recherche MR lorsqu'ils effectuent leurs déterminations d'applications à télécharger. Dans ce cas, les moyens de gestion MG du dispositif doivent stocker des informations d'usage, par exemple dans les quatrièmes moyens de stockage MS4.

On notera que le dispositif D peut être éventuellement agencé de manière à recevoir du réseau R la liste des applications qui sont en cours d'utilisation dans des équipements EC' voisins, et/ou à transmettre la liste des applications qui sont en cours d'utilisation dans son propre équipement EC. Cette transmission peut éventuellement se faire en mode diffusion (ou "broadcast"), soit directement par chaque équipement EC, soit indirectement via un équipement de réseau.

Un exemple de scénario susceptible de survenir à un usager A, et les conséquences que cela induit dans son équipement EC du fait de la présence d'un dispositif D, est décrit ci-après.

L'usager A s'apprête à prendre un avion pour aller en Espagne. Lorsqu'il arrive à l'aéroport le dispositif D de son équipement EC peut par exemple spontanément télécharger des applications relatives au trafic aérien, à l'enregistrement électronique, à la cartographie de l'aéroport, à des informations (ou nouvelles) si l'usager A est assis, et/ou à un comparateur de prix si l'usager A est en train de marcher dans une galerie marchande de l'aéroport.

Ces applications sont déterminées selon les préférences et/ou activités et/ou besoins en cours de l'usager A. On notera que les contenus de chaque application peuvent être éventuellement personnalisés.

Une fois que l'avion a décollé, toutes les applications téléchargées sont devenues inutiles, à l'exception de celle relative au trafic aérien (utile pour le vol du retour), et sont donc supprimées de l'équipement EC.

Lorsque l'usager A arrive à l'aéroport espagnol de destination, le dispositif D de son équipement EC peut par exemple spontanément télécharger des applications relatives à la location de voiture, aux divers moyens de transport public (trains, cars, bus, taxi), et/ou à la cartographie de la ville principale à côté de laquelle est situé l'aéroport.

Lorsque l'usager quitte l'aéroport, toutes les applications téléchargées sont devenues inutiles, à l'exception de celles relatives au trafic aérien (utile pour le vol du retour) et à la cartographie de la ville principale (prochainement utile), et sont donc supprimées de l'équipement EC.

La ville étant Madrid, lorsque l'usager A se promène dans le voisinage du musée le Prado, le dispositif D de son équipement EC peut par exemple spontanément télécharger des applications relatives au Prado car il sait que son usager A est amateur d'art et, par exemple, que ces applications sont en cours d'utilisation par d'autres usagers (car il en a été averti). Le bénéfice est alors double pour l'usager A du fait qu'il est alerté de la présence du Prado dans son voisinage et qu'il dispose de toutes les informations publiques utiles à la visite du Prado.

L'invention offre un certain nombre d'avantages, parmi lesquels:
- elle permet de proposer aux usagers des applications qui sont déterminées parmi toutes celles qui sont accessibles via un réseau,
- elle permet de proposer aux usagers, de façon opportuniste, des applications qui sont susceptibles de leur être utile à l'instant considéré, compte tenu de leur contexte et/ou de leur activité, et donc d'anticiper les besoins des usagers,
- elle offre un nouveau moyen de découverte d'applications nouvelles,
- elle permet de rendre les applications pertinentes immédiatement utilisables, sans intervention de l'usager.

L'invention ne se limite pas aux modes de réalisation de dispositif de gestion et d'équipement de communication décrits ci-avant, seulement à titre d'exemple, mais elle englobe toutes les variantes que pourra envisager l'homme de l'art dans le cadre des revendications ci-après.

## Revendications

1. Dispositif (D) de gestion d'applications pour un équipement de communication (EC) d'un usager pouvant se connecter à un réseau de communication (R), **caractérisé en ce qu'**il comprend i) des moyens de recherche (MR) agencés pour déterminer sans intervention dudit usager, via ledit réseau (R) des applications pouvant être téléchargées et utilisées par ledit équipement de communication (EC) et potentiellement utiles audit usager en fonction d'au moins un paramètre, et ii) des moyens de gestion (MG) agencés pour ordonner le téléchargement dans des moyens de stockage (MS2), par ledit équipement de communication (EC), de l'une au moins des applications déterminées afin de la proposer audit usager, et pour contrôler l'installation de chaque application proposée sélectionnée par ledit usager afin qu'elle puisse être éventuellement utilisée au moins temporairement.

2. Dispositif selon la revendication 1, **caractérisé en ce que** lesdits moyens de recherche (MR) sont agencés pour déterminer chaque application en fonction d'au moins un paramètre choisi dans un groupe comprenant au moins l'activité en cours de l'usager, des informations contextuelles, un profil dudit usager, des préférences dudit usager, la capacité de stockage restante desdits moyens de stockage (MS2), une quantité maximale de données que l'on autorise à télécharger, la bande passante du réseau (R) pouvant être utilisée par ledit équipement de communication (EC), la couverture du réseau (R), une estimée de durée de l'activité en cours dudit usager, une prévision de changement de contexte, une prévision de changement d'activité, et l'énergie disponible dans ledit équipement de communication (EC).

3. Dispositif selon la revendication 2, **caractérisé en ce que** lesdites informations contextuelles sont choisies dans un groupe comprenant au moins les applications en cours d'utilisation par ledit usager, le lieu où est situé ledit usager, l'heure considérée, le jour considéré, les informations contenues dans un agenda électronique dudit usager, l'environnement social dudit usager, les applications qu'utilise habituellement ledit usager lorsqu'il exerce ladite activité en cours, des applications utilisées par des équipements de communication appartenant à des usagers situés dans le voisinage dudit usager.

4. Dispositif selon la revendication 3, **caractérisé en ce qu'**il comprend des moyens d'analyse (MA) agencés pour déduire l'activité en cours dudit usager de certaines informations contextuelles et/ou d'informations de localisation de cet usager et/ou d'activités antérieures dudit usager.

5. Dispositif selon la revendication 4, **caractérisé en ce que** lesdits moyens d'analyse (MA) sont agencés pour déduire de futures informations contextuelles et/ou une durée de validité des informations contextuelles courantes de ladite activité en cours de l'usager.

6. Dispositif selon l'une des revendications 4 et 5, **caractérisé en ce que** lesdits moyens d'analyse (MA) sont agencés pour déduire une future activité de l'usager de ladite activité en cours de cet usager et d'éventuelles habitudes antérieures dudit usager.

7. Dispositif selon l'une des revendications 1 à 6, **caractérisé en ce que** lesdits moyens de gestion (MG) sont agencés pour ordonner le téléchargement par ledit équipement de communication (EC) de chaque application déterminée dans des moyens de stockage (MS2) dédiés au stockage temporaire.

8. Dispositif selon l'une des revendications 1 à 7, **caractérisé en ce que** lesdits moyens de gestion (MG) sont agencés pour proposer lesdites applications téléchargées dans lesdits moyens de stockage (MS2) par affichage dans une zone dédiée (ZD) d'un écran d'affichage (EA) dudit équipement de communication (EC).

9. Dispositif selon la revendication 8, **caractérisé en ce que** lesdits moyens de gestion (MG) sont agencés pour contrôler l'affichage dans ladite zone dédiée (ZD) d'un nombre d'applications proposées inférieur ou égal à un premier seuil.

10. Dispositif selon l'une des revendications 1 à 9, **caractérisé en ce que** lesdits moyens de gestion (MG) sont agencés pour déterminer chaque application précédemment installée et devenue inutile compte tenu du contexte en cours et d'un éventuel futur contexte déduit et/ou de l'activité en cours et d'une éventuelle future activité déduite, et pour ordonner la désinstallation de chaque application inutile déterminée.

11. Dispositif selon la revendication 10, **caractérisé en ce que** lesdits moyens de gestion (MG) sont agencés pour incrémenter d'une unité une valeur représentative du nombre de fois qu'une application a été téléchargée par ledit équipement de communication (EC) et utilisée par ledit usager, et, lorsqu'une application est devenue inutile, soit pour ordonner sa suppression desdits moyens de stockage (MS2) lorsque sa valeur associée est inférieure à un deuxième seuil, soit son stockage dans d'autres moyens de stockage (MS3) dédiés lorsque sa valeur associée est supérieure ou égale audit deuxième seuil, afin de pouvoir la proposer de nouveau ultérieurement sans avoir à la télécharger de nouveau.

12. Dispositif selon la revendication 11, **caractérisé en ce que** lesdits moyens de gestion (MG) sont agencés pour proposer audit usager de transférer une application stockée dans lesdits moyens de stockage (MS2) vers d'autres moyens de stockage (MS1) dédiés au stockage permanent d'applications, lorsque ladite valeur associée à cette application est supérieure à un troisième seuil.

13. Dispositif selon l'une des revendications 1 à 12, **caractérisé en ce que** lesdits moyens de gestion (MG) sont agencés pour analyser l'usage desdites applications téléchargées en fonction d'un contexte en cours et/ou d'une activité en cours, de manière à établir une correspondance entre des types d'application et des contextes et/ou activités.

14. Dispositif selon l'une des revendications 1 à 13, **caractérisé en ce qu'**il est agencé pour recevoir dudit réseau (R) la liste des applications qui sont en cours d'utilisation dans des équipements de communication voisins, et/ou pour transmettre la liste des applications qui sont en cours d'utilisation dans ledit équipement de communication (EC).

15. Equipement de communication (EC) d'usager, propre à se connecter à un réseau de communication (R), **caractérisé en ce qu'**il comprend un dispositif de gestion (D) selon l'une des revendications précédentes.
